# EUROPEAN PATENT SPECIFICATION

(11) **EP 3 164 995 B1**
(45) Date of publication and mention of the grant of the patent: **15.07.2020**
(21) Application number: 15815046.6
(22) Date of filing: 21.06.2015
(51) Int. Cl.: G06F 21/56, H04N 21/2389, H04N 21/83, H04L 29/06

(54) **SECURE ENCLAVE-RENDERED CONTENTS**
VON SICHEREN ENKLAVEN ÜBERSETZE INHALTE
CONTENUS RENDUS EN ENCLAVE SÉCURISÉE

(30) Priority: 01.07.2014 IL 23346914; 18.06.2015 US 201514743172
(43) Date of publication of application: 10.05.2017
(73) Proprietor: McAfee, LLC, Santa Clara, CA 95054 (US)
(72) Inventor: WOODWARD, Carl D., Santa Clara, California 95054 (US); ARKIN, Ofir, 4965410 Petah Tikva (IL)
(74) Representative: Maiwald Patent- und Rechtsanwaltsgesellschaft mbH
(86) International application number: PCT/US2015/036851
(87) International publication number: WO 2016/003676

(56) References cited:
- US-A- 6 067 410
- US-A1- 2006 031 940
- US-A1- 2008 209 551
- US-A1- 2009 178 003
- US-A1- 2011 069 835
- US-A1- 2013 191 897
- US-A1- 2013 247 182
- US-B1- 8 001 194

## Description

### CROSS-REFERENCE TO RELATED APPLICATIONS

This Application claims priority to Israel Patent Application 233469, titled "Secure Enclave-Rendered Contents", filed July 1, 2014, and to U.S. Non-Provisional Application 14/743,172, titled "Secure Enclave-Rendered Contents", filed June 18, 2015.

### FIELD OF THE INVENTION

This application relates to the field of computer security, and more particularly to rendering secure content and data within an enclave.

### BACKGROUND

Networked computing systems are often susceptible to attacks and potentially unwanted content (PUC). Attacks may come in the form of security vulnerabilities that exploit, for example, open ports that operate services with security vulnerabilities, or in the form of a potentially malicious payload. It is desirable to protect computing systems from PUC.

US 6,067,410 A discloses an emulation repair system that restores virus-infected computer files to their uninfected states without risk of infecting the rest of the computer system. To this end, the virus-infected computer file is emulated in a virtual machine.

US 2006/031 940 A1 discloses a system and method for protecting a computer system from malicious software. A first non-networked processor with a private first memory data storage area is coupled with a second networked processor with a shared second memory data storage area.

US 2008/209 551 A1 discloses a system and method for eliminating malware from a file by converting the file from a first file format to a second file format. The converter runs in a restricted process with limited access to the operating system.

### BRIEF DESCRIPTION OF THE DRAWINGS

The present disclosure is best understood from the following detailed description when read with the accompanying FIGURES. It is emphasized that, in accordance with the standard practice in the industry, various features are not drawn to scale and are used for illustration purposes only. In fact, the dimensions of the various features may be arbitrarily increased or reduced for clarity of discussion.
FIGURE 1 is a network diagram of a heterogeneous network according to one or more examples of the present Specification.
FIGURE 2 is a block diagram of an enclave-capable computing device according to one or more examples of the present Specification.
FIGURES 3A and 3B are block diagrams of an enclave-capable memory according to one or more examples of the present Specification.
FIGURES 4A - 4C are block diagrams of secure rendering and editing of content according to one or more examples of the present Specification.
FIGURES 5 - 7 are flow charts of methods performed according to one or more examples of the present Specification.
FIGURE 8 is a block diagram of an enclaveless computing device according to one or more examples of the present Specification.
FIGURES 9A and 9B are block diagrams of enclaveless rendering and editing of secure content according to one or more examples of the present Specification.
FIGURES 10 - 12 are network diagrams of exchanges of secure and unsecure content according to one or more examples of the present Specification.

### DETAILED DESCRIPTION OF THE EMBODIMENTS

### EMBODIMENTS OF THE DISCLOSURE

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. The invention is defined by the subject-matter of the independent claim. Advantageous embodiments are subject to the dependent claims.

Different embodiments may have different advantages, and no particular advantage is necessarily required of any embodiment.

According to one or more examples of the present Specification, a system and method are disclosed that may be useful in identifying and remediating potentially-unwanted content (PUC) embedded in content, such as executable objects, files, data packets, and so forth. As used throughout this Specification, PUC includes any virus, trojan, zombie, rootkit, backdoor, worm, grayware, spyware, adware, ransomware, dialer, payload, malicious browser helper object, cookie, logger, macro, or similar, designed to take a potentially-unwanted action, including by way of non-limiting example data destruction, covert data collection, browser hijacking, network proxy or redirection, covert tracking, data logging, keylogging, excessive or deliberate barriers to removal, contact harvesting, and unauthorized self-propagation. In some cases, PUC may include software that includes inadvertent security flaws that cause or enable malicious behavior. PUC may also include content that is undesirable or against policy in a particular context, such as pornography, content "not safe for work," or content that promotes hate, violence, dissent, illegal activity, or is otherwise unwanted.

To identify and remediate PUC, a system and method according to the present Specification may render inbound dynamic content, such as e-mails, documents, spreadsheets, images, and other active content in an enclave, trusted execution environment (TEE), or other secure environment. Rendering may be invoked, for example, by operating system (OS) integration in key application input/output (IO) paths, a software development kit (SDK) used by client applications, plugins, or OS hooks, by way of non-limiting example.

The enclave may render the content during preprocessing, including rendering malware inert or removing it from inbound content, stripping out or masking inappropriate content, and watermarking or signing the rendered copy of the content to assert that it has been securely rendered.

In some cases, the content may be fully converted into an "enclave secured format" (ESF) so that it can be viewed, manipulated, and verified in the enclave at later times. ESF content may also be shared with other devices that do not have enclave capabilities, though they may lose some of the security features.

In certain embodiments, rendering may occur on the device originating the content, in an intermediate server, or on the receiving device, by way of non-limiting example. In some cases, an application programming interface (API) may also be provided so that third-party applications, such as email clients and browsers, can also safely render, preview, and/or modify content.

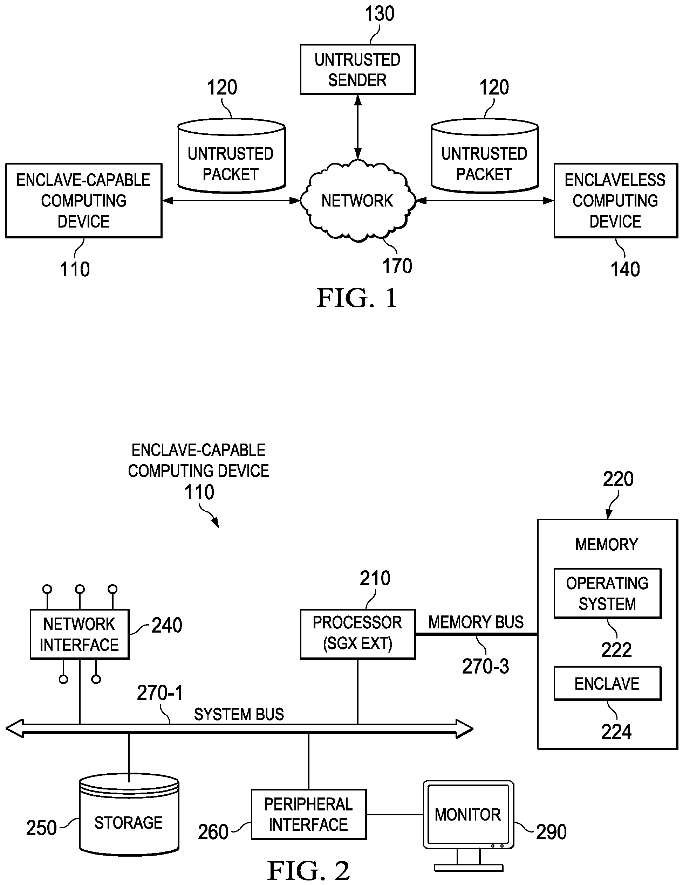

FIGURE 1 is a block diagram of a network according to one or more examples of the present Specification. A network of FIGURE 1, and untrusted sender 130 provides an untrusted packet 120 via a network 170, such as the Internet. Also disclosed in FIGURE 1 are enclave-capable computing device (ECCD) 110 and an enclaveless computing device 140 connected to untrusted sender 130 via network 170. Untrusted packet 120 may belong to a class of packets and/or data that contain potentially unwanted content (PUC). Notably, the classification of untrusted packet 120 into a class of packets that may contain PUC does not necessarily imply that untrusted packet 120 contains PUC, or that if it contains potentially unwanted content, that the content may be unwanted within the context of a particular endpoint. For example, untrusted packet 120 may be a completely innocuous HTML file, in which case even though it is classified into a class of data that may contain a PUC, in the specific example untrusted packet 120 does not contain PUC.

In another example, an untrusted packet 120 may be delivered to two separate endpoints, such as ECCD 110 and an enclaveless computing device 140. In this example, untrusted packet 120 may contain partisan political information or images. Enclaveless computing device 140 may belong to a political activist or politically active entity, in which case the partisan political payload of untrusted packet 120 may be desirable for enclaveless computing device 140. In contrast, ECCD 110 may be part of the business network that, according to policy, restricts partisan political content on its network. Thus, in the context of ECCD 110, the partisan political payload of untrusted packet 120 is in fact unwanted content.

Thus, a theoretically perfect remediation system for PUC, which may include an anti-malware capability, will identify the partisan political content of untrusted packet 120 as unwanted with respect to ECCD 110 and wanted with respect to enclaveless computing device 140.

In another example, untrusted sender 130 is operated by a malware distributor, and untrusted packet 120 includes an objectively harmful payload, such as a virus. Thus, a theoretically perfect remediation system operating in the network will either identify the payload of untrusted packet 120 as objectively harmful, and block it from both ECCD 110 and enclaveless computing device 140, or render the payload as inert and harmless, whether or not the payload is identified as malicious

In yet another example, an untrusted sender 130 provides an untrusted packet 120, containing a payload including active content, such as a macro. In this example, the macro may perform a useful function, such as a mortgage calculator. Mortgage calculator of untrusted packet 120 performs no harmful functions, and is not contrary to policy for either ECCD 110 or enclaveless computing device 140. Thus, a properly functioning remediation system will allow the payload of untrusted packet 120 to execute on both ECCD 110 and enclaveless computing device 140.

It should be noted that these examples provide only a sampling of many different scenarios where a remediation system must properly identify and/or act on a payload of an untrusted packet 120. It is also noted that in many cases ECCD 110 and enclaveless computing device 140 may also include a separate remediation system that scans a local hard drive for potentially unwanted content, and upon classifying data as PUC, determines whether the content should be blocked, sandboxed, inoculated, or otherwise acted upon.

For the purpose of discussion throughout this Specification, a data grouping such as a file, program, packet, macro, or other useful grouping is referred to as "content." Thus, in the context of this Specification, a remediation system may classify, analyze, and/or potentially act on content. Content may also be further subdivided. For example, a Microsoft Word document is content. The Word document may be divided into several subparts, such as plaintext, markup and formatting, and active content, such as macros, images, and other embedded objects. In some cases, a subpart of a Word document or other content may be treated separately as content in its own right. Thus, unless specified otherwise, contents is intended in this Specification to be construed broadly as a piece of content, or any relevant subpart thereof that in its own right constitutes content.

FIGURE 2 is a block diagram of an enclave-capable computing device (ECCD) 110 according to one or more examples of the present Specification. ECCD 110 may include any type of node, user device, including by way of non-limiting example a computer, a personal digital assistant (PDA), a laptop or electronic notebook, a cellular telephone, an IP telephone, an iPhone™, an iPad™, a Microsoft Surface™, an Android™ phone, a Google Nexus™, or any other device, component, element, or object capable of executing instructions and interfacing with a user. In certain examples, ECCD 110 may be an embodiment of ECCD 110 of FIGURE 1.

ECCD 110 includes a processor 210, which may include for example the Intel® SGX extensions or similar capabilities. As used throughout this Specification, a "processor" may include any combination of hardware, software, or firmware providing programmable logic, including by way of non-limiting example a microprocessor, digital signal processor, field-programmable gate array, programmable logic array, application-specific integrated circuit, or virtual machine processor.

Processor 210 may be communicatively coupled to a system bus 270-1 and a memory bus 270-3. As used throughout this Specification, a "bus" includes any wired or wireless interconnection line, network, connection, bundle, single bus, multiple buses, crossbar network, single-stage network, multistage network or other conduction medium operable to carry data, signals, or power between parts of a computing device, or between computing devices. It should be noted that these uses are disclosed by way of non-limiting example only, and that some embodiments may omit one or more of the foregoing buses, while others may employ additional or different buses.

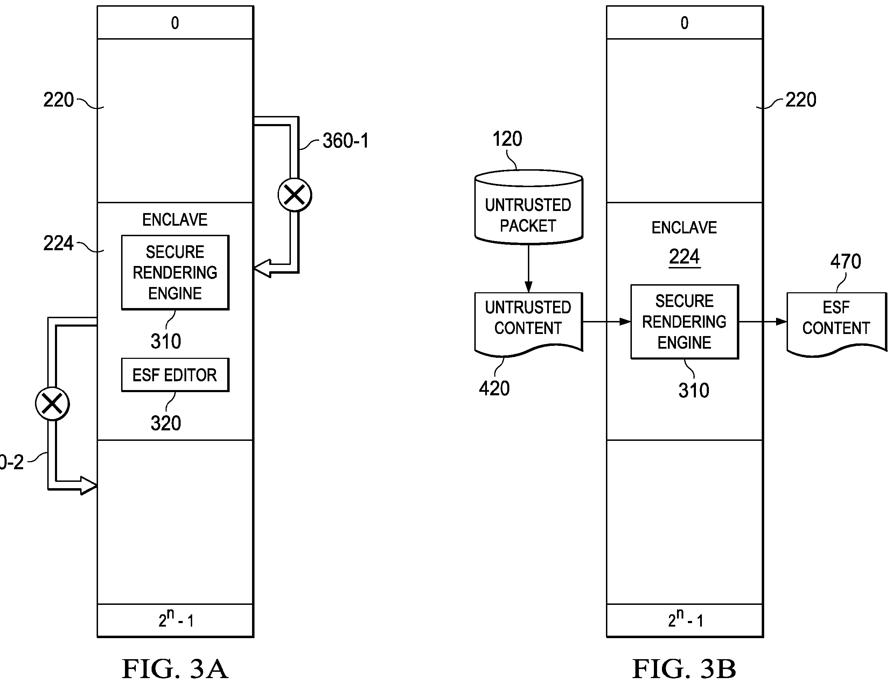

Memory bus 270-3 communicatively couples processor 210 to memory 220, which has loaded therein an operating system 222 providing low-level services for application software. This Specification contemplates, however, embodiments wherein a traditional operating system 222 may be unnecessary, such as in embedded systems or controllers, wherein applications may run on "bare metal." Memory 220 may also include an enclave 224, described with more particularity in connection with FIGURE 3A.

Processor 210 may be connected to memory 220 in a DMA configuration via DMA bus 270-3. To simplify this disclosure, memory 220 is disclosed as a single logical block, but in a physical embodiment may include one or more blocks of any suitable volatile or non-volatile memory technology or technologies, including for example DDR RAM, SRAM, DRAM, cache, L1 or L2 memory, on-chip memory, registers, flash, ROM, optical media, virtual memory regions, magnetic or tape memory, or similar. In certain embodiments, memory 220 may comprise a relatively low-latency volatile main memory, while storage 250 may comprise a relatively higher-latency non-volatile memory. However, memory 220 and storage 250 need not be physically separate devices, and in some examples may represent simply a logical separation of function. It should also be noted that although DMA is disclosed by way of non-limiting example, DMA is not the only protocol consistent with this Specification, and that other memory architectures are available.

A storage 250 may communicatively couple to processor 210 via system bus 270-1. Storage 250 may be a species of memory 220. In some embodiments, memory 220 and storage 250 may be separate devices, with memory 220 being a relatively low-latency volatile memory device, and storage 250 being a relatively high-latency non-volatile memory device. Storage 250 may also be another device, such as a hard drive, solid-state drive, external storage, redundant array of independent disks (RAID), network-attached storage, optical storage, tape drive, backup system, cloud storage, or any combination of the foregoing. Storage 250 may be, or may include therein, a database or databases or data stored in other configurations. Many other configurations are also possible, and are intended to be encompassed within the broad scope of this Specification. In an example, program execution involves loading instructions from storage 250 into memory 220. Instructions are then fetched into processor 210 for execution. Data may also be loaded from storage 250 into memory 220 for availability to processor 210 during program execution.

A network interface 240 may communicatively couple to processor 210, and may be operable to communicatively couple processor 210 to a network. In this Specification, a "network" includes any communicative platform operable to exchange data or information within or between computing devices, including by way of non-limiting example, an ad-hoc local network, an internet architecture providing computing devices with the ability to electronically interact, a plain old telephone system (POTS), which computing devices could use to perform transactions in which they may be assisted by human operators or in which they may manually key data into a telephone or other suitable electronic equipment, any packet data network (PDN) offering a communications interface or exchange between any two nodes in a system, or any local area network (LAN), metropolitan area network (MAN), wide area network (WAN), wireless local area network (WLAN), virtual private network (VPN), intranet, or any other appropriate architecture or system that facilitates communications in a network or telephonic environment.

A peripheral interface 260 communicatively couples to processor 210 via system bus 270-1, and may be operable to communicatively couple processor 210 to one or more peripherals. As used in this Specification, a "peripheral" includes any auxiliary device that connects to ECCD 110 but that is not necessarily a part of the core architecture of ECCD 110. A peripheral may be operable to provide extended functionality to ECCD 110, and may or may not be wholly dependent on ECCD 110. In some cases, a peripheral may be a computing device in its own right. Peripherals may include input and output devices such as displays, terminals, printers, keyboards, mice, modems, network controllers, sensors, transducers, actuators, controllers, data acquisition buses, cameras, microphones, speakers, or external storage by way of non-limiting example. Peripheral interface 260 may include or provide a user interface, including any combination of hardware, software, and firmware configured to enable a user to interact with ECCD 110, whether or not in real-time. A "user" could be a person, entity, or device capable of operating, using, or otherwise interfacing with ECCD 110.

Note that the components described in FIGURE 2 are provided by way of example only, and are not intended to limit ECCD 110 to the particular configuration shown. Any component of FIGURE 2 may be omitted in appropriate circumstances, while in other appropriate circumstances, any component may be duplicated as necessary, or combined with another component. For example, in some cases, network interface 240 may be used to provide connectivity to certain peripherals, so that the function of peripheral interface 260 is subsumed therein. Thus, it should be understood that the division between components herein is not intended to imply a necessary or strict physical division. Rather, components are divided according to logical functions, and where appropriate, a single device may perform a plurality of functions. In one example, ECCD 110 may be provided, in its entirety, as a system-on-a-chip (SoC), wherein some or all of the functions disclosed herein may be provided in a single monolithic semiconductor device. In another example, ECCD 110 may be provided as a virtual machine comprising a processor, a memory, and executable instructions operable to instruct the processor to emulate, virtualize, or otherwise provide one or more elements of ECCD 110.

FIGURE 3A is a block diagram of memory 220 disclosing with more particularity certain features of memory 220 in one or more examples of the present Specification. In the example of FIGURE 3A, memory 220 includes enclave 224. Enclave 224 is provided as an example of a secure environment provided within memory 220. In certain systems, computing devices equipped with the Intel SGS instruction extensions may be capable of providing an enclave 224. It should be noted however, that many other examples of secure environments are available, and enclave 224 is provided only as one example thereof. Other secure environments may include, by way of nonlimiting example, a virtual machine, sandbox, testbed, test machine, or other similar device or method for providing a secure environment.

In an example, enclave 224 provides a protected memory area that cannot be accessed or manipulated by ordinary computer instructions. Enclave 224 is described with particular reference to an Intel® SGX enclave by way of example, but it is intended that enclave 224 encompass any secure processing area with suitable properties, regardless of whether it is called an "enclave."

One feature of an enclave is that once an enclave region 224 of memory 220 is defined, as illustrated by features 360-1 and 360-2, a program pointer cannot enter or exit enclave 224 without the use of special enclave instructions or directives, such as those provided by Intel® SGX architecture. For example, SGX processors provide the ENCLU[EENTER], ENCLU[ERESUME], and ENCLU[EEXIT]. These are the only instructions that may legitimately enter into or exit from enclave 224.

Thus, once enclave 224 is defined in memory 220, a program executing with an enclave 224 may be safely verified to not operate outside of its bounds. This security feature means that secure rendering engine 310 is verifiably local to enclave 224. Thus, when untrusted packet 120 provides its content to be rendered with secure rendering engine 310 of enclave 224, the result of the rendering is verified as secure.

Enclave 224 may also digitally sign its output, which provides a verifiable means of ensuring that content has not been tampered with or modified since being rendered by secure rendering engine 310. A digital signature provided by enclave 224 is unique to enclave 224 and is unique to the hardware of ECCD 110.

In this example, enclave 224 also includes ESF editor 320. ESF editor 320 may be a utility for editing or otherwise modifying enclave secured format content. Enclave secured format is provided as an example of a format that may be used by secure rendering engine 310, or otherwise used with an enclave 224.

As seen in FIGURE 3B, secure rendering engine 310 may be used to translate untrusted content 420 into ESF content 470. For example, untrusted packet 120 may include a payload of untrusted content 420, such as a Microsoft Word document, which may include embedded macros, images, or other embedded objects. Untrusted content 420 is provided to secure rendering engine 310 with an enclave 224. Secure rendering engine 310 may be capable of translating untrusted content 420 into ESF content 470. For example, secure rendering engine 310 may translate the Microsoft Word document from the format of untrusted content 420 into an equivalent format in ESF file format content 470.

Advantageously, ESF content 470 may be digitally signed and verified, so that a user of ECCD 110 can verifiably ensure that ESF content 470 has not been tampered with, altered, modified, or otherwise changed.

In certain examples, ESF may provide a read only file format, suitable for static content. This is similar to the Adobe PDF or Microsoft XPS file formats, which, in general, are less easily editable then other similar formats. However, unlike those formats, ESF may provide, enclave-capable devices and by way of its digital signature, the additional security of verifying that a file has not been modified.

In other embodiments, ESF may be a dynamic format subject to editing. Any such editing must be performed within ESF editor 320 (FIGURE 3A) of enclave 224. This ensures that each new version of the ESF content 470 is digitally signed and verified and safely rendered within enclave 224.

It should be noted, however, that it is technologically feasible to provide an ESF editor 320 outside of enclave 224. In this case, ESF editor 320 may be enabled to modify ESF content 470, but will not be able to digitally sign and verify ESF content 470. Thus, content so rendered loses its chain of trust, and must be treated as untrusted content 420, despite being in the ESF format.

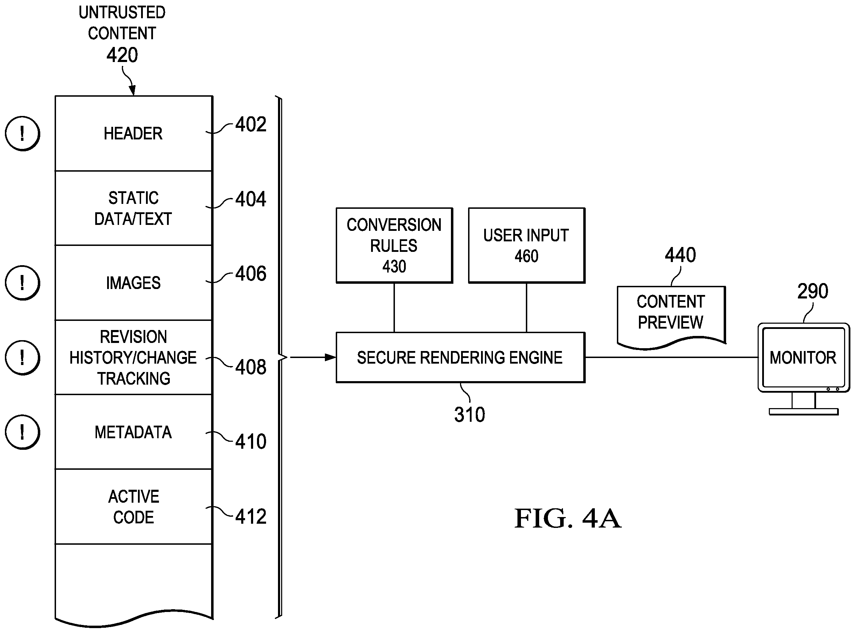

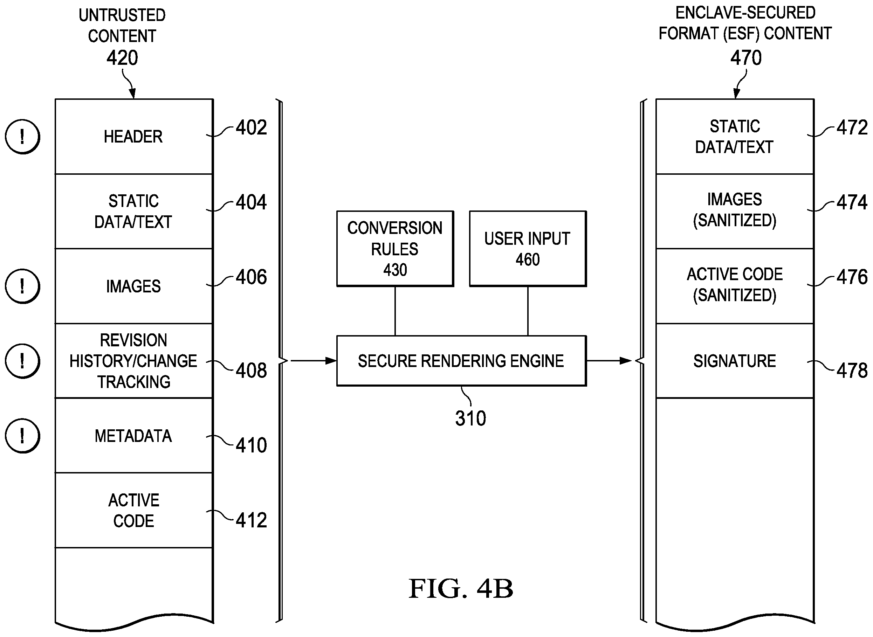

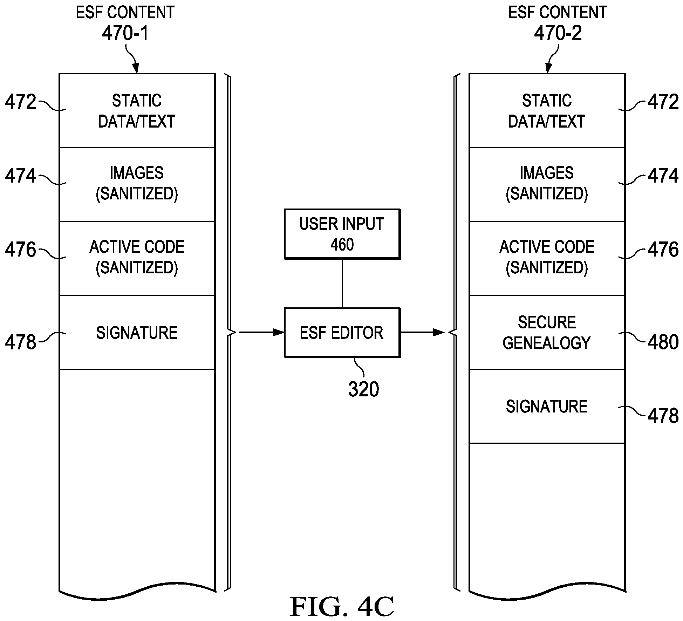

FIGURES 4A, 4B, and 4C disclose examples of secure rendering engine 310 operating on untrusted content 420. In the example of FIGURE 4A, untrusted content 420 includes a header 402, static data or text 404, images 406, revision history or change tracking 408, metadata 410, and active or executable code 412. In this example, untrusted content 420 may be classified into a certain category based on its characteristics or properties. Classes of untrusted content 420 may be defined based on the remediation characteristics of the class. For example, a remediation engine is provided to look only for possibly offensive images or sensitive data, then static data 404 and active code 412 may be treated as within a class that does not contain PUC. However, content metadata contained within header 402 may be potentially compromising, as well as revision history or change tracking 408, and other metadata 410. Images may also be suspect because of their ability to disclose proprietary or confidential data. It should be noted that these classifications are provided only by way of example, and many other classifications are possible. For example, in an antivirus context, active code 412 may be only filled with in untrusted content 420 that is treated as containing PUC. In that case, the antivirus engine is not concerned with the propriety of the other data, and is only concerned with protecting a computing device from malicious code. Thus, it will be appreciated that the identification of untrusted content 420 as pertaining to a class of content that may contain PUC, and the classification of subparts of untrusted content 420 as pertaining to a class that may contain PUC will be specific individual use cases.

Secure rendering engine 310 receives untrusted content 420 to perform remediation on untrusted content 420. Inputs into secure rendering engine 310 may include conversion rules 430 and user input 460. Other examples of inputs may include algorithms, heuristics, data, and histograms, by way of non-limiting example.

For example, conversion rules 430 may contain mappings for converting certain elements of a Microsoft Word document into a format displayed by secure rendering engine 310. User input 460 may include user configuration files that control options for secure rendering engine 310, or that provide interactive capabilities. For example, secure rendering engine 310 may provide via monitor 290 a graphical user interface (GUI) that previews certain select elements of untrusted content 420, so that users make decisions about how to treat untrusted content 420. This may include, by way of example, content preview 440, previewing the operations and results of active code 412, possibly including the ability to step through macros or other active code, and previewing metadata 410 revision or change history 408 and headers 402 that may be stripped from the content. The user may interactively select whether to keep or reject these elements. With content preview 440, secure rendering engine 310 may provide content preview 440 to monitor 290.

Responsive to reviewing content preview 440 on monitor 290, the end user may choose several actions. In one case, the user decides to trust and accept untrusted content 420. In this case, untrusted content 420 is provided to the user in its native form without alteration. Notably, in this case, untrusted content 420 cannot be signed by secure rendering engine 310. However, content preview 440 may be signed by secure rendering engine 310. Thus, the end user may be ensured that the content preview 440 is a legitimate output of secure rendering engine 310.

In this context, secure rendering engine 310 provides a service similar to current antivirus products, whose purpose are merely to accept or reject incoming or existing content, and in this case provides a secure and verifiable interactive user experience to allow the user to control with greater granularity which content to accept or reject. In certain embodiments, display and input may be provided via secure input and output devices connected via peripheral interface 260 of FIGURE 2.

In another embodiment, the user may use content preview 440 to strip out certain portions of untrusted content 420, or otherwise make modifications or edits to untrusted content 420, but may still provide in the end a version in the untrusted format. For example, if untrusted content 420 is a Microsoft Word document, and includes the elements listed on FIGURE 4A, the user may choose to strip out header 402, change tracking 408, and metadata 410, while maintaining static data/text 404 and active code 412. The user may also choose to retain images 406, but may elect to block, modify, or otherwise alter certain images that are against policy or otherwise considered harmful, for example if certain images 406 contain pornographic or semi-pornographic content, the user may block, modify, or alter these images. In other cases, images may be blocked, modified, or altered automatically via policy.

In the example of FIGURE 4B, secure rendering engine 310 is used not merely to provide content preview 440, but also to create an ESF content 470. It should be noted that the operations of FIGURE 4A may be preliminary to the creation of ESF content 470.

In this example, as before, untrusted content 420 includes header 402, static data/text 404, images 406, revisions history/change tracking 408, metadata 410, and active code 412. Secure rendering engine 310 may be used to create a content preview 440, and the user may elect to keep some or all of the elements of untrusted content 420.

However, in FIGURE 4B secure rendering engine 310 may also convert untrusted content 420 from its original form into ESF content 470. As before, conversion rules 430 may contain mappings for performing the conversion, and user input 460 may include both configuration files and real-time interactive user input. Based on the conversion rules 430, and user input 460, in this example, secure rendering engine 310 retains static data/text 472, images 474, active code 476, and the enclave signature 478. It should be noted that in ESF content 470, images 474 have been sanitized. This may include blocking or omitting certain images from the original images 406. This may also include modifying, obscuring, or otherwise altering some of the original images 406. Active code 476 is also sanitized from active code 412. This may include, for example, blocking calls that perform certain low level or system functions or that are otherwise potentially harmful. In some examples, ESF may provide an entire set of macro instructions, and active code 412 may be translated into equivalent active codes 476, which provides a sanitized form. It should be noted that by design, ESF may provide a limited or reduced set of macro instructions, and therefore it may not be possible to convert all of active code 412 into sanitized active codes 476. In this case, a trade-off may be made between security and capability. Advantageously, because ESF provides only known safe macros, and therefore cannot be used to harm the system, ESF content 470 may be trusted as safe content.

Finally, ESF content 470 includes a digital signature 478, which verifies that ESF content 470 has not been altered or tampered with. This means that if ECCD 110 provides ESF content 470 to another ECCD, then the new ECCD may trust ESF content 470 and know that it cannot harm the system.

In FIGURE 4C, ESF editor 320 is used to edit ESF content 470-1. In this case, ESF editor 320 is similar to a common content editor, but is provided to edit ESF content 470-1. As discussed above, for ESF editor 320 to provide trusted ESF content 470, ESF editor 320 must reside within enclave 224.

In this case, ESF content 470-1 includes static data/text 472, sanitized images 474, sanitized active code 476, and enclave signature 478. ESF editor 320 receives user input 460, and updates ESF content 470-2 appropriately. ESF content 470-2 also includes static data/text 472, sanitized images 474, active code 476, and a signature 478. However, ESF content 470-2 also includes a secure genealogy 480. This may be a verifiable form of content history, which may include the time the content was modified, the identity of the user who modified the content, and the machine the content was modified on. An example feature of ESF content 470 is that for signature 478 to be valid, secure genealogy 480 cannot have been tampered with.

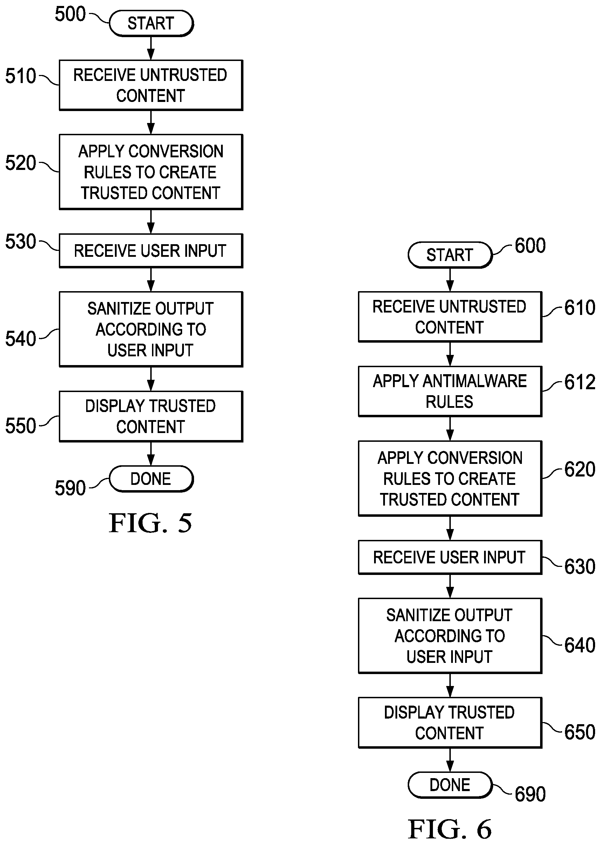

FIGURE 5 is a flow chart of a method 500 of generating and displaying trusted content according to one or more examples of the present Specification. In certain embodiments, method 500 may be performed by secure rendering engine 310 of ECCD 110.

In block 510 secure rendering engine 310 receives untrusted content, such as untrusted content 420 of FIGURE 4.

In block 520, secure rendering engine 310 applies conversion rules to create trusted content, such as ESF content 470 of FIGURES 4A, 4B, and 4C in some embodiments. In other embodiments, secure rendering engine 310 may not generate ESF content 470, but rather may simply render untrusted content 420 for display and preview by a user. Creation of the trusted content may include use of conversion rules 430, as described in FIGURES 4A, 4B, and 4C.

In block 530, secure rendering engine 310 receives user input, such as user input 460 of FIGURES 4A, 4B, and 4C. Secure rendering engine 310 may apply user input 460 to modify or adapt ESF content 470, as disclosed herein, or to modify a display provided on monitor 290 of FIGURE 2.

In block 540, secure rendering engine 310 may sanitize the output according to user input 460, and also based on conversion rules 430 in certain embodiments. Sanitizing outputs in block 540 may involve any of the sanitizing or modification procedures discussed herein.

In block 550, the trusted content is displayed on monitor 290. Again, displaying of the content on monitor 290 may involve any of the methods or techniques discussed herein.

In block 590, the method is done.

FIGURE 6 is a flow chart of a method 600 of generating and displaying a trusted content in conjunction with an anti-malware engine according to one or more examples of the present Specification. In certain embodiments, method 600 may be performed by secure rendering engine 310 of ECCD 110.

In block 610 secure rendering engine 310 receives untrusted content, such as untrusted content 420 of FIGURE 4.

In block 612, secure rendering engine 310 may apply anti-malware rules according to an anti-malware or antivirus program. To maintain a trusted environment, the anti-malware or antivirus program may be run from within enclave 224.

In block 620, secure rendering engine 310 applies conversion rules to create trusted content, such as ESF content 470 of FIGURES 4A, 4B, and 4C in some embodiments. In other embodiments, secure rendering engine 310 may not generate ESF content 470, but rather may simply render untrusted content 420 for display and preview by a user. Creation of the trusted content may include use of conversion rules 430, as described in FIGURES 4A, 4B, and 4C.

In block 630, secure rendering engine 310 receives user input, such as user input 460 of FIGURES 4A, 4B, and 4C. Secure rendering engine 310 may apply user input 460 to modify or adapt ESF content 470, as disclosed herein, or to modify a display provided on monitor 290 of FIGURE 2.

In block 640, secure rendering engine 310 may sanitize the output according to user input 460, and/or also based on conversion rules 430 in certain embodiments. Sanitizing outputs in block 640 may involve any of the sanitizing or modification procedures discussed herein.

In block 650, the trusted content is displayed on monitor 290. Again, displaying of the content on monitor 290 may involve any of the methods or techniques discussed herein.

In block 690, the method is done.

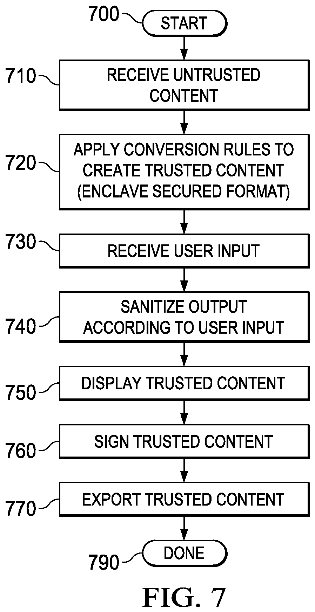

FIGURE 7 is a flow chart of a method 700 of generating and exporting trusted content according to one or more examples of the present Specification. In certain embodiments, method 700 may be performed by secure rendering engine 310 of ECCD 110.

In block 710 secure rendering engine 310 receives untrusted content, such as untrusted content 420 of FIGURE 4.

In block 720, secure rendering engine 310 applies conversion rules to create trusted content, such as ESF content 470 of FIGURES 4A, 4B, and 4C. Creation of the trusted content may include use of conversion rules 430, as described in FIGURES 4A, 4B, and 4C.

In block 730, secure rendering engine 310 optionally receives user input, such as user input 460 of FIGURES 4A, 4B, and 4C. Secure rendering engine 310 may apply user input 460 to modify or adapt ESF content 470, as disclosed herein.

In block 740, secure rendering engine 310 may sanitize the output according to user input 460, and/or based on conversion rules 430 in certain embodiments. Sanitizing outputs in block 740 may involve any of the sanitizing or modification procedures discussed herein.

In block 750, the trusted content is displayed on monitor 290. Again, displaying of the content on monitor 290 may involve any of the methods or techniques discussed herein. It should be noted that in certain embodiments, displaying the trusted content for user preview may be optional in conjunction with generating and exporting a trusted content.

In block 760, secure rendering engine 310 signs the trusted content according to methods disclosed herein. This may be, for example, a digital signature unique to enclave 224 as discussed above.

In block 770, secure rendering engine 310 exports the trusted content. This may include, for example, writing the trusted content out to a hard drive, or sending the trusted content across a network. Notably, although the secure content has left the trusted environment of enclave 224, the content may still be treated as trusted so long as its digital signature remains intact and valid.

In block 790, the method is done.

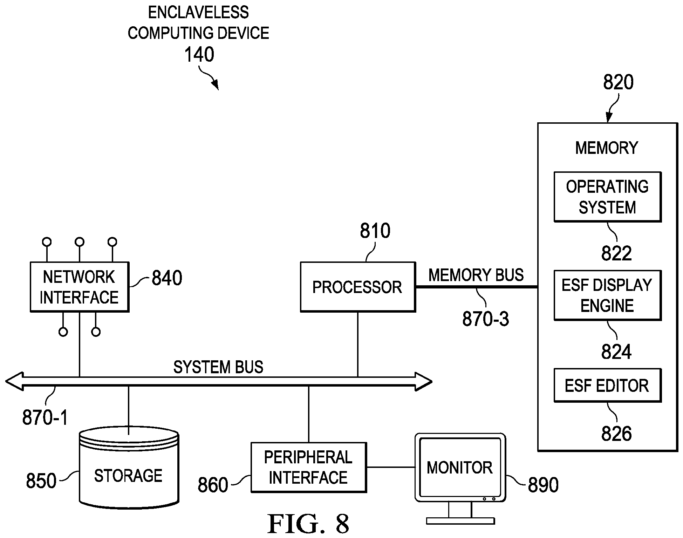

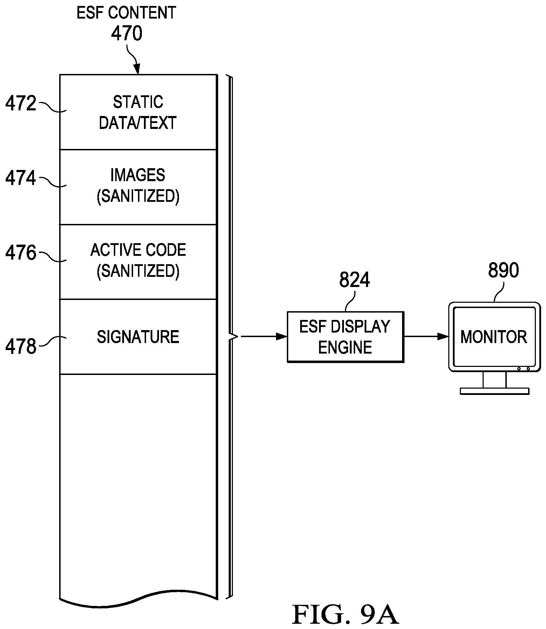

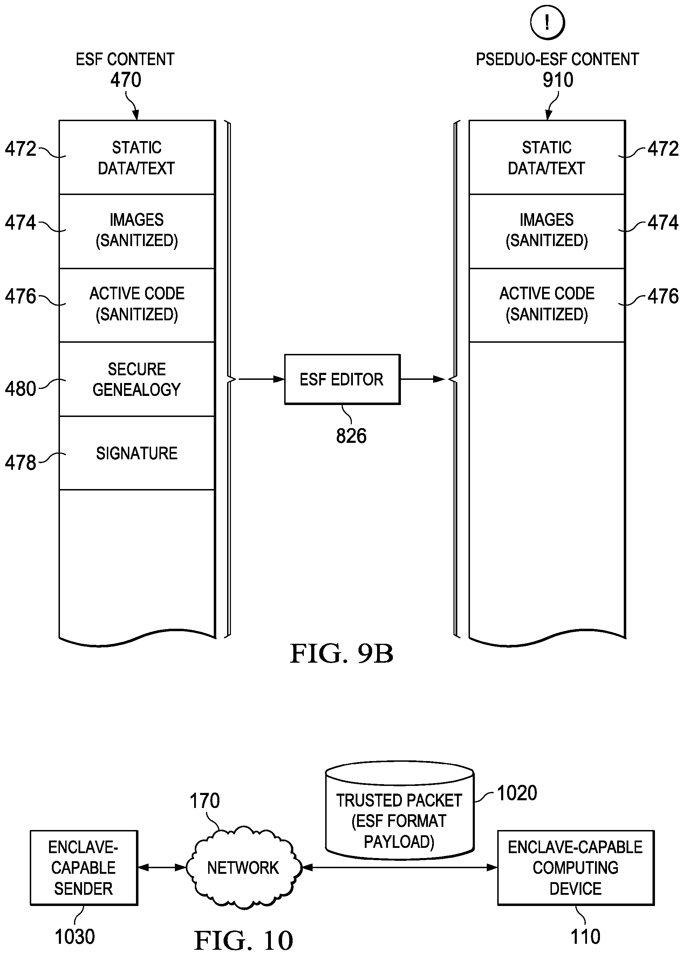

FIGURE 8 is a block diagram of an enclaveless computing device 140 according to one or more examples of the present Specification. In general, the definitions and examples provided in connection with ECCD 110 of FIGURE 2 are also applicable to relevant elements of enclaveless computing device 140. Enclaveless computing device 140 includes a processor 810, which in this example may not be equipped with Intel® SGX capabilities. Processor 810 may be communicatively coupled to a system bus 870-1 and a memory bus 870-3. Memory bus 870-3 communicatively couples processor 810 to memory 820, which has loaded therein an operating system 822 providing low-level services for application software. In certain examples, memory 820 may also include an ESF display engine 824 and an ESF editor 826, which are discussed in greater detail in connection with FIGURES 9A and 9B.

A storage 850 may communicatively couple to processor 810 via system bus 870-1. Storage 850 may be a species of memory 820.

A network interface 840 may communicatively couple to processor 810 via system bus 870-1, and may be operable to communicatively couple processor 810 to a network.

A peripheral interface 860 communicatively couples to processor 810 via system bus 870-1, and may be operable to communicatively couple processor 810 to one or more peripherals, including monitor 890.

Note that the components described in FIGURE 8 are provided by way of example only, and are not intended to limit enclaveless computing device 140 to the particular configuration shown. Any component of FIGURE 2 may be omitted in appropriate circumstances, while in other appropriate circumstances, any component may be duplicated as necessary, or combined with another component. For example, in some cases, network interface 840 may be used to provide connectivity to certain peripherals, so that the function of peripheral interface 860 is subsumed therein. Thus, it should be understood that the division between components herein is not intended to imply a necessary or strict physical division. Rather, components are divided according to logical functions, and where appropriate, a single device may perform a plurality of functions. In one example, enclaveless computing device 140 may be provided, in its entirety, as a system-on-a-chip (SoC), wherein some or all of the functions disclosed herein may be provided in a single monolithic semiconductor device. In another example, enclaveless computing device 140 may be provided as a virtual machine comprising a processor, a memory, and executable instructions operable to instruct the processor to emulate, virtualize, or otherwise provide one or more elements of enclaveless computing device 140.

FIGURE 9A is a block diagram of a conversion process performed by an enclaveless computing device, such as enclaveless computing device 140 of FIGURE 8. Enclaveless computing device 140 receives ESF format content 470. ESF content 470 includes static data or text 472, sanitized images 474, sanitized active code 476, and a digital signature 478. These may be substantially as described elsewhere herein. ESF display engine 824 is configured to correctly render the content of ESF content 470, and may also be configured with security features such as the ability to verify signature 478. Notably, however, the ability of enclaveless computing device 140 to verify ESF content 470 is more limited than the ability of secure rendering engine 310 of FIGURE 3A.

After correctly rendering ESF content 470, ESF display engine 824 may display appropriate output on monitor 890. In certain embodiments, monitor 890 may be a secure display device.

FIGURE 9B is a block diagram of a conversion process performed by enclaveless computing device 140 in which ESF content 470 may be converted to another format instead of or in addition to displaying on monitor 890. In the embodiment of FIGURE 9B, ESF editor 826 receives ESF content 470. As before, ESF content 470 may include static data or text 472, sanitized images 474, sanitized active code 476, and digital signature 478. By way of illustration, ESF content 470 also includes a secure genealogy 480, as described with more particularity in FIGURE 4C.

In an example, ESF editor 826 converts ESF content 470 to pseudo-ESF content 910. Pseudo-ESF content 910 also includes static data/text 472, sanitized images 474, and sanitized active code 476. However, pseudo-ESF document does not include a secure genealogy 480 or signature 478. This is because in certain embodiments, an enclaveless computing device 140 does not meet the requirements to sign ESF content 470 and create a secure genealogy. Thus, while pseudo-ESF content 910 contains all of the substantive data of ESF content 470, in the same format, pseudo-ESF content 910 is not verifiable by an ECCD 110, and thus may not be treated as trusted content.

FIGURE 10 is a network diagram of an exchange of trusted packet 1020 on a network 170 according to one or more examples of the present Specification. In this example, enclave capable sender 1030 provides a trusted packet 1020 over network 170. Trusted packet 1020 may comprise, for example, ESF content 470 as described elsewhere within this Specification.

In this example, ECCD 110 receives trusted packet 1020 including it's ESF format payload. In this example, ECCD 110 may not need to apply any anti-malware, antivirus, or other special processing to trusted packet 1020. Rather, by virtue of a digital signature 478 included with in trusted packet 1020, ECCD 110 may designate trusted packet 1020 as safe. In that case, ECCD 110 may use secure rendering engine 310 to simply display the payload of secure packet 1020 on monitor 290. ECCD 110 may also edit trusted packet 1020, for example via ESF editor 320 of figure 4C.

The example of FIGURE 10 provides a trusted chain between enclave capable sender 1030 and ECCD 110. Thus, enclave capable sender 1030 and ECCD 110 may securely exchange trusted packet 1020 back and forth, without the need for additional antivirus or anti-malware processing so long as the ESF is correctly signed.

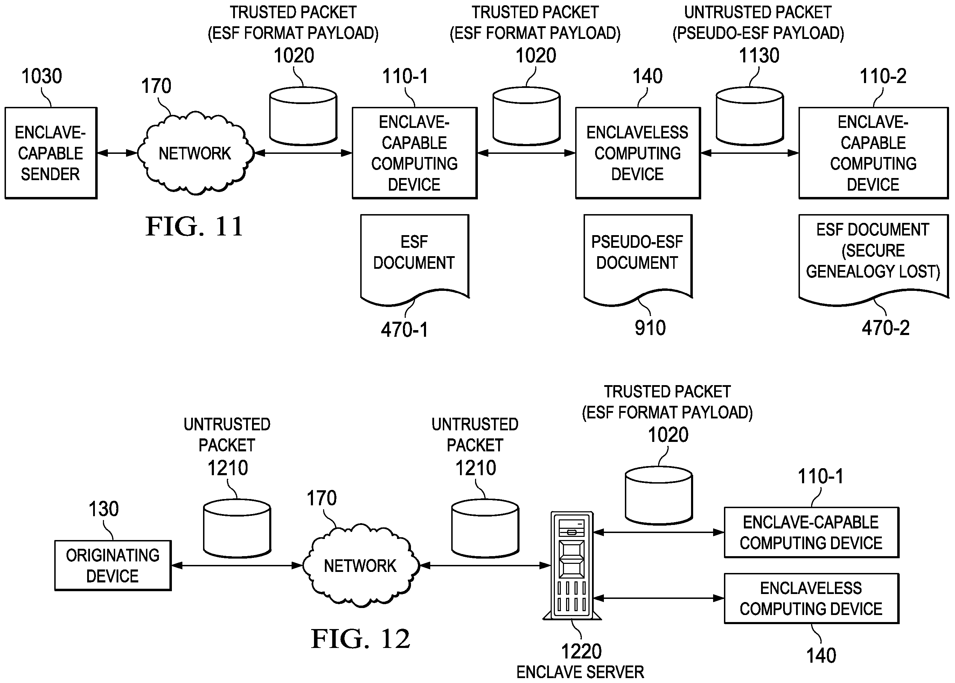

FIGURE 11 is a network diagram of a heterogeneous network in which enclave capable devices and enclaveless devices exchange content back and forth. In this example, enclave capable sender 1030 may generate a trusted packet 1020 within ESF format payload. Enclave capable sender 1030 delivered this trusted packet 1020 via network 170. ECCD 110-1 receives trusted packet 1020, and extraction ESF content 470-1. In this case, ECCD 110-1 may trust ESF content 470-1 as verified and trusted content, without any additional anti-malware or antivirus processing. Instead, ECCD 110 may render ESF content 470-1 through secure rendering engine 310, or may edit ESF content 470-1 via ESF editor 320. After handling ESF content 470-1, ECCD 110-1 may transfer another trusted packet 1020 to enclaveless computing device 140. Enclaveless computing device 140 may include an ESF display engine 824 and ESF editor 826. Thus, enclaveless computing device 140 may safely render ESF content 470-1 from trusted packet 1020, and may pass on trusted packet 1020 without altering security characteristics. Thus, for example, if enclaveless computing device 140 delivers trusted packet 1020 to ECCD 110-2, said computing device 110-2 may treat trusted packet 1020 as a secure packet, and may render or edit ESF content 470-1 without additional anti-malware or antivirus processing.

However, enclaveless computing device 140 may receive trusted packet 1020 and may edit ESF content 470-1 via ESF editor 826. Because enclaveless computing device 140 does not include an enclave in which ESF content 470-1 can be securely edited, the output of enclaveless computing device 140-1 is pseudo-ESF content 910. Pseudo-ESF content 910 is not secure, and may not contain a valid signature. Thus, although pseudo-ESF content 910 is in the same format as ESF content 470-1, if enclaveless computing device 140 delivers pseudo-ESF content 910 to ECCD 110-2 as untrusted packet 1130, ECCD 110-2 will treat pseudo-ESF content 910 as untrusted content. Thus, ECCD 110-2 may render pseudo-ESF content 910 in its own secure rendering engine 310, and may edit pseudo-ESF content 910 in ESF editor 320. In some cases ECCD 110-2 will continue to treat pseudo-ESF content 910 as untrusted content. This may be appropriate, for example, if pseudo-ESF content 910 is to be delivered back to an enclaveless computing device 140. In other examples, ECCD 110-2 may verify pseudo-ESF content 910 according to the methods disclosed herein, and may thereby render ESF content 470-2. It should be noted, however that although ESF content 470-2 may include the exact identical dock content of ESF content 470-1, ESF content 470-2 has lost a secure genealogy 480 that was attached to ESF content 470-1. Thus, ESF content 470-2 will have its genealogy reset, but will otherwise be a valid ESF content 470.

FIGURE 12 is a block diagram of a server-client trust model according to one or more examples of the present Specification. In this case, an enclave server 1220 is disposed, for example in a position that may traditionally be occupied by an antivirus or anti-malware server. In this case, originating device 130 generates untrusted packet 1210. Originating device 130 delivers untrusted packet 1210 via network 170 enclave server 1220. Enclave server 1220 may scan untrusted packet 1210, and may perform any of the methods discussed herein. In particular, enclave server 1220 may convert the payload of untrusted packet 1210 and ESF content 470. Thus, enclave server 1220 generates a trusted packet 1020, within ESF format payload such as ESF content 470. Enclave server 1220 may deliver trusted packet 1020 to ECCD 110-1, which may then treat trusted packet 1020 as a secure and verified packet. Thus, in this example, ECCD 110-1 does not need to securely render or convert the payload of untrusted packet 1210.

It should also be noted that enclaveless computing device 140 can similarly be connected to enclave server 1220. Although enclaveless computing device 140 lacks an enclave, and thus lacks some of the security features of ECCD 110, enclaveless computing device 140 may still include ESF display engine 824, and or ESF editor 826, and may be able to use trusted packet 1020. Thus, enclaveless computing device 140 may treat trusted packet 1020 as a trusted or verified packet, requiring no additional anti-malware or antivirus activity.

Thus, enclave server 1220 may provide enhanced security for a heterogeneous network. The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the scope of the present disclosure, and that they may make various changes, substitutions, and alterations herein without departing from the scope of the present disclosure.

Advantageously, the system and method of the present Specification may be used to enable, among other things, distribution of word processing documents in a corporate environment for reading and previewing, while removing, rendering inert, or rendering safe, any active content. They may also enable sanitizing of hypertext transfer protocol (HTTP) streams before rendering them in a browser. The processing could change the content into a new multipurpose internet mail extension (MIME) type that is securely rendered and signed. Sanitization could also safely remove inappropriate links according to policy. In yet another example, inbound emails could be rendered as ESF HTML streams, containing only visible items, thus removing avenues for attack.

The particular embodiments of the present disclosure may readily include a system on chip (SOC) central processing unit (CPU) package. An SOC represents an integrated circuit (IC) that integrates components of a computer or other electronic system into a single chip. It may contain digital, analog, mixed-signal, and radio frequency functions: all of which may be provided on a single chip substrate. Other embodiments may include a multi-chip-module (MCM), with a plurality of chips located within a single electronic package and configured to interact closely with each other through the electronic package. In various other embodiments, the digital signal processing functionalities may be implemented in one or more silicon cores in Application Specific Integrated Circuits (ASICs), Field Programmable Gate Arrays (FPGAs), and other semiconductor chips.

In example implementations, at least some portions of the processing activities outlined herein may also be implemented in software. In some embodiments, one or more of these features may be implemented in hardware provided external to the elements of the disclosed FIGURES, or consolidated in any appropriate manner to achieve the intended functionality. The various components may include software (or reciprocating software) that can coordinate in order to achieve the operations as outlined herein. In still other embodiments, these elements may include any suitable algorithms, hardware, software, components, modules, interfaces, or objects that facilitate the operations thereof.

Additionally, some of the components associated with described microprocessors may be removed, or otherwise consolidated. In a general sense, the arrangements depicted in the FIGURES may be more logical in their representations, whereas a physical architecture may include various permutations, combinations, and/or hybrids of these elements. It is imperative to note that countless possible design configurations can be used to achieve the operational objectives outlined herein. Accordingly, the associated infrastructure has a myriad of substitute arrangements, design choices, device possibilities, hardware configurations, software implementations, equipment options, etc.

Any suitably configured processor component can execute any type of instructions associated with the data to achieve the operations detailed herein. Any processor disclosed herein could transform an element or an article (for example, data) from one state or thing to another state or thing. In another example, some activities outlined herein may be implemented with fixed logic or programmable logic (for example, software and/or computer instructions executed by a processor) and the elements identified herein could be some type of a programmable processor, programmable digital logic (for example, a field programmable gate array (FPGA), an erasable programmable read only memory (EPROM), an electrically erasable programmable read only memory (EEPROM), an ASIC that includes digital logic, software, code, electronic instructions, flash memory, optical disks, CD-ROMs, DVD ROMs, magnetic or optical cards, other types of machine-readable mediums suitable for storing electronic instructions, or any suitable combination thereof. In operation, processors may store information in any suitable type of non-transitory storage medium (for example, random access memory (RAM), read only memory (ROM), FPGA, EPROM, EEPROM, etc., software, hardware, or in any other suitable component, device, element, or object where appropriate and based on particular needs. Further, the information being tracked, sent, received, or stored in a processor could be provided in any database, register, table, cache, queue, control list, or storage structure, based on particular needs and implementations, all of which could be referenced in any suitable timeframe. Any of the memory items discussed herein should be construed as being encompassed within the broad term 'memory.' Similarly, any of the potential processing elements, modules, and machines described herein should be construed as being encompassed within the broad term 'microprocessor' or 'processor.' Furthermore, in various embodiments, the processors, memories, network cards, buses, storage devices, related peripherals, and other hardware elements described herein may be realized by a processor, memory, and other related devices configured by software or firmware to emulate or virtualize the functions of those hardware elements.

Computer program logic implementing all or part of the functionality described herein is embodied in various forms, including, but in no way limited to, a source code form, a computer executable form, and various intermediate forms (for example, forms generated by an assembler, compiler, linker, or locator). In an example, source code includes a series of computer program instructions implemented in various programming languages, such as an object code, an assembly language, or a high-level language such as OpenCL, Fortran, C, C++, JAVA, or HTML for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

In the discussions of the embodiments above, the capacitors, buffers, graphics elements, interconnect boards, clocks, DDRs, camera sensors, dividers, inductors, resistors, amplifiers, switches, digital core, transistors, and/or other components can readily be replaced, substituted, or otherwise modified in order to accommodate particular circuitry needs. Moreover, it should be noted that the use of complementary electronic devices, hardware, non-transitory software, etc. offer an equally viable option for implementing the teachings of the present disclosure.

In one embodiment, any number of electrical circuits of the FIGURES may be implemented on a board of an associated electronic device. The board can be a general circuit board that can hold various components of the internal electronic system of the electronic device and, further, provide connectors for other peripherals. More specifically, the board can provide the electrical connections by which the other components of the system can communicate electrically. Any suitable processors (inclusive of digital signal processors, microprocessors, supporting chipsets, etc.), memory elements, etc. can be suitably coupled to the board based on particular configuration needs, processing demands, computer designs, etc. Other components such as external storage, additional sensors, controllers for audio/video display, and peripheral devices may be attached to the board as plug-in cards, via cables, or integrated into the board itself. In another embodiment, the electrical circuits of the FIGURES may be implemented as stand-alone modules (e.g., a device with associated components and circuitry configured to perform a specific application or function) or implemented as plug-in modules into application specific hardware of electronic devices.

Note that with the numerous examples provided herein, interaction may be described in terms of two, three, four, or more electrical components. However, this has been done for purposes of clarity and example only. It should be appreciated that the system can be consolidated in any suitable manner. Along similar design alternatives, any of the illustrated components, modules, and elements of the FIGURES may be combined in various possible configuration, all of which are clearly within the broad scope of this Specification. In certain cases, it may be easier to describe one or more of the functionalities of a given set of flows by only referencing a limited number of electrical elements. It should be appreciated that the electrical circuits of the FIGURES and its teachings are readily scalable and can accommodate a large number of components, as well as more complicated/sophisticated arrangements and configurations. Accordingly, the examples provided should not limit the scope or inhibit the broad teachings of the electrical circuits as potentially applied to a myriad of other architectures.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "steps for" are specifically used in the particular claims; and (b) does not intend, by any statement in the Specification, to limit this disclosure in any way that is not otherwise reflected in the appended claims.

## Claims

1. A method (700) comprising:
receiving (710), by a secure rendering engine (310) that is verifiably local to an enclave region (224) of memory (220) in an enclave-capable computing device (110) or enclave server (1220), a payload comprising untrusted content (420);
classifying the payload as a candidate for potentially-unwanted content (PUC);
applying (720), by the secure rendering engine (310), conversion rules (430) to convert the content (420) to an enclave secured format, thereby forming trusted content (470),
sanitizing (740), by the secure rendering engine (310), the trusted content (470) according to the conversion rules (430) and optionally according to user input (460) previously received (730),
signing (760), by the secure rendering engine (310), the trusted content (470) with a digital signature that is unique to the enclave (224) and unique to the hardware of the enclave-capable computing device (110) or enclave server (1220); and
exporting (770), by the secure rendering engine (310), the trusted content (470) from the enclave region (224).

2. The method (700) of claim 1, wherein the enclave secured format content (470) is read-only.

3. The method (700) of claim 1, wherein the enclave secured format content (470) is read-write.

4. The method (700) of claim 1, wherein the enclave secured format content (470) includes active content capabilities.

5. The method (700) of any of claims 1 - 4, further comprising receiving an input identifying a portion of the content (420) as unwanted.

6. The method (700) of claim 5, further comprising removing the identified portion from the content (420).

7. The method (700) of claim 6, further comprising removing the identified portion from the enclave secured format content (470).

8. The method (700) of any of claims 1 - 4, wherein the enclave region (224) comprises a restricted memory region that can entered or exited only by means of a secured branching instruction.

9. An apparatus comprising means for performing the method (700) of any of the preceding claims.

10. The apparatus of Claim 9, wherein the means for performing the method comprises a processor (210) and a memory (220).

11. The apparatus of Claim 10, wherein the memory (220) comprises machine-readable instructions that, when executed, cause the apparatus to perform the method of any of claims 1 - 8.

12. The apparatus of any of claims 9 - 11, wherein the apparatus is a computer system (110, 1220).

13. One or more computer-readable mediums comprising instructions that, when executed, implement a method (700) or realize an apparatus as claimed in any preceding claim.

## Patentansprüche

1. Verfahren (700), das Folgendes umfasst:
Empfangen (710), durch eine sichere Darstellungsengine (310), die nachprüfbar lokal zu einem Enklavenbereich (224) von Speicher (220) in einer enklaven-fähigen Datenverarbeitungsvorrichtung (110) oder einem Enklaven-Server (1220) ist, von Nutzdaten, umfassend nicht vertrauenswürdigen Inhalt (420);
Klassifizieren der Nutzdaten als Kandidat für potenziell unerwünschten Inhalt (PUC);
Anwenden (720), durch die sichere Darstellungsengine (310), von Umwandlungsregeln (430), um den Inhalt (420) in ein enklaven-gesichertes Format umzuwandeln, dadurch vertrauenswürdigen Inhalt (470) bildend,
Säubern (740), durch die sichere Darstellungsengine (310), des vertrauenswürdigen Inhalts (470) entsprechend den Umwandlungsregeln (430) und optional entsprechend vorher empfangener (730) Benutzereingabe (460),
Signieren (760), durch die sichere Darstellungsengine (310), des vertrauenswürdigen Inhalts (470) mit einer digitalen Signatur, die eindeutig für die Enklave (224) und eindeutig für die Hardware der enklaven-fähigen Datenverarbeitungsvorrichtung (110) oder den Enklaven-Server (1220) ist; und
Exportieren (770), durch die sichere Darstellungsengine (310), des vertrauenswürdigen Inhalts (470) aus dem Enklavenbereich (224).

2. Verfahren (700) nach Anspruch 1, wobei der Inhalt im enklaven-gesicherten Format (470) Nur-Lese-Inhalt ist.

3. Verfahren (700) nach Anspruch 1, wobei der Inhalt im enklaven-gesicherten Format (470) Lese-Schreib-Inhalt ist.

4. Verfahren (700) nach Anspruch 1, wobei der Inhalt im enklaven-gesicherten Format (470) aktive Inhaltsfähigkeiten umfasst.

5. Verfahren (700) nach einem der Ansprüche 1-4, ferner umfassend Empfangen einer Eingabe, die einen Teil des Inhalts (420) als unerwünscht identifiziert.

6. Verfahren (700) nach Anspruch 5, ferner umfassend Entfernen des identifizierten Teils aus dem Inhalt (420).

7. Verfahren (700) nach Anspruch 6, ferner umfassend Entfernen des identifizierten Teils aus dem Inhalt im enklaven-gesicherten Format (470).

8. Verfahren (700) nach einem der Ansprüche 1-4, wobei der Enklavenbereich (224) einen eingeschränkten Speicherbereich umfasst, der nur mittels einer gesicherten Abzweigungsanweisung betreten oder verlassen werden kann.

9. Einrichtung, umfassend Mittel zum Durchführen des Verfahrens (700) nach einem der vorhergehenden Ansprüche.

10. Einrichtung nach Anspruch 9, wobei das Mittel zum Durchführen des Verfahrens einen Prozessor (210) und einen Speicher (220) umfasst.

11. Einrichtung nach Anspruch 10, wobei der Speicher (220) maschinenlesbare Anweisungen umfasst, die, wenn ausgeführt, die Einrichtung veranlassen, das Verfahren nach einem der Ansprüche 1-8 durchzuführen.

12. Einrichtung nach einem der Ansprüche 9-11, wobei die Einrichtung ein Computersystem (110, 1220) ist.

13. Ein oder mehrere computerlesbare Medien, umfassend Anweisungen, die, wenn ausgeführt, ein Verfahren (700) oder eine Einrichtung nach einem der vorhergehenden Ansprüche umsetzen.

## Revendications

1. Procédé (700) comprenant les étapes consistant à :
recevoir (710), par un moteur de rendu sécurisé (310) qui est, de façon vérifiable, local à une région d'enclave (224) d'une mémoire (220) d'un dispositif informatique à gestion d'enclaves (110) ou d'un serveur d'enclaves (1220), une charge utile comprenant un contenu non fiable (420) ;
classer la charge utile comme candidate pour correspondre à un contenu potentiellement indésirable (PUC) ;
appliquer (720), par le moteur de rendu sécurisé (310), des règles de conversion (430) pour convertir le contenu (420) en un format sécurisé d'enclave, ce qui permet de former un contenu fiable (470),
assainir (740), par le moteur de rendu sécurisé (310), le contenu fiable (470) selon les règles de conversion (430) et, en option, selon l'entrée d'utilisateur (460) préalablement reçue (730),
signer (760), par le moteur de rendu sécurisé (310), le contenu fiable (470) avec une signature numérique qui est propre à l'enclave (224) et propre au matériel du dispositif informatique à gestion d'enclaves (110) ou du serveur d'enclaves (1220) ; et
exporter (770), par le moteur de rendu sécurisé (310), le contenu fiable (470) depuis la région d'enclave (224).

2. Procédé (700) selon la revendication 1, dans lequel le contenu en format sécurisé d'enclave (470) est en lecture seule.

3. Procédé (700) selon la revendication 1, dans lequel le contenu en format sécurisé d'enclave (470) est en lecture et écriture.

4. Procédé (700) selon la revendication 1, dans lequel le contenu en format sécurisé d'enclave (470) contient des capacités de contenu actives.

5. Procédé (700) selon l'une quelconque des revendications 1 à 4, comprenant également l'étape consistant à recevoir une entrée qui détermine qu'une partie du contenu (420) est indésirable.

6. Procédé (700) selon la revendication 5, comprenant également l'étape consistant à éliminer du contenu (420) la partie ainsi déterminée.

7. Procédé (700) selon la revendication 6, comprenant également l'étape consistant à éliminer du contenu en format sécurisé d'enclave (470) la partie ainsi déterminée.

8. Procédé (700) selon l'une quelconque des revendications 1 à 4, dans lequel la région d'enclave (224) comprend une région de mémoire restreinte dans laquelle on ne peut entrer ou dont on ne peut sortir qu'au moyen d'une instruction de branchement sécurisée.

9. Appareil comprenant un moyen pour effectuer le procédé (700) selon l'une quelconque des revendications précédentes.

10. Appareil selon la revendication 9, dans lequel le moyen pour effectuer le procédé comprend un processeur (210) et une mémoire (220).

11. Appareil selon la revendication 10, dans lequel la mémoire (220) contient des instructions lisibles par machine qui, lorsqu'elles sont exécutées, amènent l'appareil à effectuer le procédé selon l'une quelconque des revendications 1 à 8.

12. Appareil selon l'une quelconque des revendications 9 à 11, l'appareil étant un système informatique (110, 1220) .

13. Un ou plusieurs supports lisibles par ordinateur contenant des instructions qui, lorsqu'elles sont exécutées, permettent de mettre en œuvre un procédé (700) ou de réaliser un appareil selon l'une quelconque des revendications précédentes.
